# EUROPÄISCHE PATENTANMELDUNG

(11) **EP 1 583 252 A1**
(43) Veröffentlichungstag der Anmeldung: **05.10.2005**
(21) Anmeldenummer: 05102207.7
(22) Anmeldetag: 21.03.2005
(51) Int. Cl.: H04B 1/38

(54) **Anordnung für einen Akku und eine SIM-Karte bei einem Mobilfunkgerät**

(30) Priorität: 30.03.2004 DE 102004015583
(71) Anmelder: SIEMENS AKTIENGESELLSCHAFT, 80333 München (DE)
(72) Erfinder: Oelschläger, Martin, 12247 Berlin (DE)

(57) **Zusammenfassung**

Bei einer Anordnung für einen Akku und eine SIM-Karte bei einem Mobilfunkgerät ist zur Erleichterung des Handlings der SIM-Karte die SIM-Karte auf der Unterseite des Akkus befestigbar, und im eingelegten Zustand des Akkus befinden sich die Kontakte der SIM-Karte mit Gegenkontakten der Leiterplatte des Mobilfunkgerätes in Kontakt.

## Beschreibung

Die vorliegende Erfindung betrifft eine Anordnung für einen Akku und eine SIM-Karte bei einem Mobilfunkgerät.

Bei Mobilfunkgeräten werden sogenannte SIM-Karten zur Identifikation des Anwenders eingesetzt. Diese SIM-Karten werden im Mobilfunkgerät in einen SIM-Kartenhalter eingeschoben und somit fixiert. In dieser Position kontaktieren die elektrischen Kontakte der SIM-Karte entsprechende Kontaktfedern des Mobilfunkgerätes. Da der SIM-Kartenhalter vorzugsweise direkt auf die Platine des Mobilfunkgerätes aufgelötet wird, ist es vorteilhaft, den SIM-Kartenhalter unter dem Akku im Akkuschacht zu positionieren. Bereits bekannt sind am Akkugehäuse angebrachte Kunststoffnasen, die ein Verschieben der SIM-Karte im SIM-Kartenhalter bei Erschütterung verhindern sollen. Dieser Aufbau mit der SIM-Karte unter dem Akku hat den Vorteil, dass die Außenfläche des Mobilfunkgerätes keine Öffnung für die SIM-Karte benötigt.

Der Nachteil dieses Aufbaukonzeptes liegt im Handling der SIM-Karte. Bisher muss als erstes der Akku aus dem Mobilfunkgerät entnommen werden. Danach erfolgt das Einlegen bzw. Herausnehmen der SIM-Karte aus dem entsprechenden SIM-Kartenhalter, was insbesondere durch die immer kleiner werdenden Mobilfunkgeräte und damit auch der immer kleiner werdenden Akkuschächte immer mehr zu einer Geduldsprobe wird.

Aufgabe der vorliegenden Erfindung ist es eine Anordnung für einen Akku und eine SIM-Karte bei einem Mobilfunkgerät anzugeben, welche sich durch ein leichtes Handling der SIM-Karte auszeichnet.

Diese Aufgabe wird für eine Anordnung für einen Akku und eine SIM-Karte bei einem Mobilfunkgerät dadurch gelöst, dass die SIM-Karte auf der Unterseite des Akkus befestigbar ist, und dass sich im eingelegten Zustand des Akkus die Kontakte der SIM-Karte mit Gegenkontakten der Leiterplatte des Mobilfunkgerätes in Kontakt befinden.

Erfindungsgemäß wird zwischen dem Akku und der SIM-Karte eine feste Einheit hergestellt. Das Handling erfolgt nun folgendermaßen: Als erstes wird die SIM-Karte am Akku befestigt. Als zweites wird der Akku mit der fixierten SIM-Karte in den Akkuschacht eingelegt und verriegelt. Zum Entnehmen der SIM-Karte aus dem Kommunikationsgerät werden gleichzeitig Akku und die an ihm fixierte SIM-Karte entnommen. In einem weiteren Schritt wird die SIM-Karte vom Akku entfernt. Die feste Einheit zwischen Akku und SIM-Karte hat den Vorteil, dass die Fixierung bzw. Entriegelung der SIM-Karte am bzw. vom Akku außerhalb des Mobilfunkgerätes erfolgt und damit sehr einfach zu handhaben ist. Ein kompliziertes Handling im Akkuschacht entfällt.

Weitere zweckmäßige Ausgestaltungen der erfindungsgemäßen Anordnung ergeben sich aus den Unteransprüchen sowie aus der Beschreibung eines Ausführungsbeispiels anhand der beigefügten Zeichnung.

In der Zeichnung zeigen
Figur 1 eine prinzipielle perspektivische Darstellung von unten eines Akkus mit einer darauf befestigten SIM-Karte, und
Figur 2 einen Längsschnitt durch einen Teil eines Mobilfunkgerätes mit einem eingelegten Akku, auf welchem eine SIM-Karte befestigt ist.

Der eigentliche Akku 1 besteht aus dem Akku-Gehäuse und den Akku-Kontakten 3.

Auf der Unterseite des Akkus 1 sind Halterungen 5 für die SIM-Karte 2 vorgesehen. Diese Halterungen können z.B. Rasthaken sein, unter welche die SIM-Karte 2 geschoben wird. Ein Verdrehschutz 6 ermöglicht ein vollständiges Einschieben der SIM-Karte 2 nur in einer Richtung. Das heißt, bei eingeschobener SIM-Karte 2 weisen die SIM-Karten-Kontakte 4 nach außen.

Im eingelegten Zustand des Akkus 1 im Akkufach kontaktieren dann die Akkukontakte 3 und die SIM-Karten-Kontakte 4 mit entsprechenden Gegenkontakten auf der Leiterplatte 7.

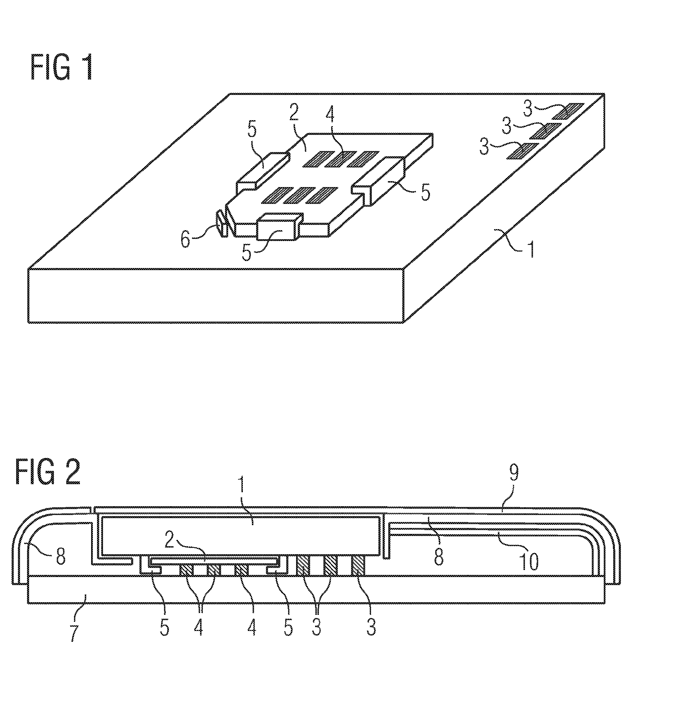

In Figur 2 sind von dem Mobilfunkgerät, in welches der Akku 1 mit der SIM-Karte 2 eingelegt wird prinzipiell noch der Montagerahmen 8, die Wechselschale 9 sowie die Antenne 10 dargestellt.

Um ein Verschieben der SIM-Karte im eingesetzten Zustand im Mobilfunkgerät zu verhindern, können entsprechende Kunststoffnasen im Akkuschacht angebracht sein.

Die SIM-Kartenkontakte im Mobilfunkgerät können durch ein federndes Blech vor ESD-Entladung geschützt werden, welches im Bereich der Kontaktfedern Aussparungen besitzt. Ist die Einheit Akku-/SIM-Karte nicht im Mobilfunkgerät eingelegt, dann ist dieses Blech im entspannten Zustand und damit höher als die SIM-Kartenkontakte. Beim Einlegen der Einheit Akku-/SIM-Karte wird das Blech von der SIM-Karte nach unten gedrückt und die SIM-Kartenkontakte kontaktieren die SIM-Karte.

Als ein Vorteil der erfindungsgemäßen Anordnung ergibt sich ein extrem einfacher und billiger SIM-Kartenhalter, der nur noch aus den erforderlichen Kontaktfedern und evtl. noch aus einem ESD-Schutz besteht. Die eigentliche SIM-Kartenbefestigung im Mobilfunkgerät wird jetzt bereits vom Akkugehäuse übernommen. Der Fixiermechanismus am Akku ist fast kostenneutral. Als Fixiervorrichtungen sind diverse Schiebe- bzw. Klemmmechanismen denkbar.

## Patentansprüche

1. Anordnung für einen Akku und eine SIM-Karte bei einem Mobilfunkgerät, **dadurch gekennzeichnet, dass** die SIM-Karte auf der Unterseite des Akkus befestigbar ist, und dass sich im eingelegten Zustand des Akkus die Kontakte der SIM-Karte mit Gegenkontakten der Leiterplatte des Mobilfunkgerätes in Kontakt befinden.

2. Anordnung nach Anspruch 1, **dadurch gekennzeichnet, dass** auf der Unterseite des Akkus Rasthaken vorgesehen sind unter welche die SIM-Karte einschiebbar ist.

3. Anordnung nach Anspruch 1, **dadurch gekennzeichnet, dass** im Akkuschacht Rastnasen angeordnet sind, welche ein Verschieben der SIM-Karte im eingelegten Zustand des Akkus verhindern.
